# EUROPÄISCHE PATENTSCHRIFT

(11) **EP 4 615 646 B1**
(45) Veröffentlichungstag und Bekanntmachung des Hinweises auf die Patenterteilung: **28.01.2026**
(21) Anmeldenummer: 23802263.6
(22) Anmeldetag: 08.11.2023
(51) Int. Cl.: G01L 5/00, B21D 39/02, B25J 9/16, B21D 19/04, B21D 19/12

(54) **FALZROBOTER MIT ZENTRALER FALZKRAFTERFASSUNG SOWIE VERFAHREN ZUM BETREIBEN UND ZUM MODERNISIEREN EINES FALZROBOTERS**
FOLDING ROBOT WITH CENTRAL FOLDING FORCE DETECTION AND METHOD FOR OPERATING AND MODERNISING A FOLDING ROBOT
ROBOT DE PLIAGE AVEC DÉTECTION DE FORCE DE PLIAGE CENTRALE ET PROCÉDÉ DE FONCTIONNEMENT ET DE MODERNISATION D'UN ROBOT DE PLIAGE

(30) Priorität: 10.11.2022 DE 102022129738
(43) Veröffentlichungstag der Anmeldung: 17.09.2025
(73) Patentinhaber: thyssenkrupp Automotive Body Solutions GmbH, 74076 Heilbronn (DE); thyssenkrupp AG, 45143 Essen (DE)
(72) Erfinder: BUCHHEIT, Martin, 66663 Merzig (DE); KAUFMANN, Dennis, 66606 Sankt Wendel (DE); MÜLLER, Johannes, 66822 Lebach (DE)
(74) Vertreter: thyssenkrupp Intellectual Property GmbH
(86) Internationale Anmeldenummer: PCT/EP2023/081172
(87) Internationale Veröffentlichungsnummer: WO 2024/100127

(56) Entgegenhaltungen:
- CN-A- 106 670 284
- DE-A1- 102004 032 392
- DE-A1- 102007 036 704
- DE-U1- 202011 000 315
- US-A1- 2008 245 124
- US-A1- 2011 107 807
- US-A1- 2015 005 939
- US-A1- 2018 050 377
- US-A1- 2018 169 828

## Beschreibung

Die Erfindung betrifft einen Falzroboter zur Ausführung eines Falzvorgangs mit einem Roboterfalzkopf umfassend ein Anbindungselement, ein Verbindungselement, ein Kopfelement und wenigstens eine Falzrolle, wobei das Verbindungselement zwischen dem Anbindungselement und dem Kopfelement angeordnet ist, und die wenigstens eine Falzrolle an dem Kopfelement angeordnet ist. Des Weiteren betrifft die Erfindung ein Verfahren zum Betreiben eines solchen Falzroboters und ein Verfahren zum Modernisieren eines Falzroboters mit einem Anbindungselement, einem ersten Verbindungselement, einem Kopfelement und wenigstens einer Falzrolle, wobei das erste Verbindungselement zwischen dem Anbindungselement und dem Kopfelement angeordnet ist, und die wenigstens eine Falzrolle an dem Kopfelement angeordnet ist.

Solche Falzroboter sind im Stand der Technik bekannt und werden beispielsweise in der Automobilindustrie eingesetzt um Karosserieaußenteile mit Karosserieinnenteilen zu verbinden. Typische Bauteile für diese Art des Zusammenbaus sind Motorhauben, Autotüren und Kotflügel. Insbesondere aus Gründen der Qualitätssicherung soll während eines Falzvorgangs eine möglichst idealisierte Falzkraft auf den Falzflansch ausgeübt werden. Dabei ist aus der KR 2086813 B1 bekannt, hierzu den Falzvorgang zu überwachen. Zudem ist aus der
DE 10 2010 051 025 A1 ein Falzroboter mit einem Kraftmessteil bekannt, wobei der Kraftmessteil eine Andrückkraft einer Falzrolle erfasst und zwischen einem Gelenkbereich eines Roboterarms und der Falzrolle angeordnet ist. Darüber hinaus ist aus der
DE 10 2004 032 392 A1 eine Falzvorrichtung bekannt, bei der eine Falzkraft einer Falzrolle mittels eines Sensors an der Achse der Falzrolle erfasst wird, wobei eine mittels der Falzrolle aufgebrachte Ist-Kraft eines Inkrements des Falzweges erfasst und mit einer Soll-Kraft verglichen wird, um bei einer Abweichung die aufgebrachte Falzkraft im nächsten Inkrement an die Soll-Kraft anzupassen. Weiter beschreibt die DE 20 2011 000 315 U1 einen Roboter mit einem Falzwerkzeug, wobei mit einer Erfassungseinrichtung beim Falzen auftretende Belastungen erfasst und über eine Anzeige an dem Falzwerkzeug angezeigt werden können. In einem Verbindungselement zwischen Anbindungselement und Kopfelement ist dabei ein Sensor vorgesehen, wobei eine Kombination von einem Wegesensor und einem Kraftsensor vorgesehen werden kann. Ein Kraftsensor kann dabei in Form einer Druckmessdose, eines DMS-Streifens oder dergleichen im Bereich des Rollenträgers angeordnet sein. Auch in der
US 2018/0050377 A1 wird eine Rollfalzvorrichtung mit Sensoren zur Erfassung einer beim Falzen ausgeübten Kraft beschrieben, wobei eine aktuell ausgeübte Kraft mit einer Soll-Kraft abgeglichen werden kann.

Nachteilig ist, dass bei den beschriebenen Ausgestaltungen ein Sensor jeweils genau einer Falzrolle zugeordnet ist. Bei Falzrobotern mit mehreren für unterschiedliche Falzvorgänge ausgebildeten Falzrollen muss insofern eine entsprechende Anzahl von Sensoren vorgesehen werden, insbesondere, wenn Falzrollen getauscht werden. Denn bei jedem Wechsel einer Falzrolle oder des gesamten Kopfelements müssen neue Sensoren integriert werden. Dadurch sind der Verdrahtungsaufwand und der Kalibrierungsaufwand erhöht. Zudem lassen sich bestehende Falzroboter ohne eine solche Krafterfassung schlecht nachrüsten. Da zudem eine Anpassung einer Ist-Kraft an eine Soll-Kraft nahezu in Echtzeit erfolgt, ist eine leistungsfähige und somit teure Recheneinheit notwendig, oder der Falzvorgang kann nur vergleichsweise langsam ausgeführt werden.

Weiter wird in der WO 2013/ 149 894 A1 ein robotergeführtes Umformwerkzeug und ein Umformverfahren zum Falzen von Werkstücken beschrieben. Mittels eines regelbaren Stellelementes wird dabei, ohne die Bahnprogrammierung in der Robotersteuerung zu ändern, eine von dem Umformwerkzeug beim Falzen ausgeübte Falzkraft eingestellt. Eine Erfassungseinrichtung für die Andrückkraft, mit der die Falzrolle gegen ein Werkstück gedrückt wird, liefert dabei die Werte für die Regeleinrichtung des Stellelementes und erhöht oder verringert so die über das Umformwerkzeug aufgebrachte Andrückkraft.

Vor diesem Hintergrund ist es eine Aufgabe der vorliegenden Erfindung, einen verbesserten Falzroboter sowie ein verbessertes Verfahren zum Betreiben eines Falzroboters bereitzustellen. Zudem soll die Möglichkeit bereitgestellt werden, bestehende Falzroboter vergleichsweise einfach mit einer Falzkraftmessung ausrüsten zu können. Insbesondere soll die Kraftmessung unabhängig von der Rollenkonfiguration, insbesondere unabhängig von dem Falzrollentyp und unabhängig von der Position der Falzrolle, funktionieren und vorteilhafterweise modular nachrüstbar sein.

Zur Lösung dieser Aufgabe werden ein Falzroboter, ein Verfahren zum Modernisieren eines Falzroboters sowie ein Verfahren zum Betreiben eines Falzroboters gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht einen Falzroboter, der zur Ausführung eines Falzvorgangs ausgebildet ist, mit einem Roboterfalzkopf vor, wobei der Roboterfalzkopf ein Anbindungselement, ein Verbindungselement, ein Kopfelement und wenigstens eine Falzrolle umfasst. Das Verbindungselement ist dabei zwischen dem Anbindungselement und dem Kopfelement angeordnet, die wenigstens eine Falzrolle ist an dem Kopfelement angeordnet und zumindest ein Teil des Verbindungselements ist als Messkörper ausgestaltet, wobei der Messkörper mit wenigstens einem an dem Messkörper angeordneten Sensorelement zur Erfassung von bei einem Falzvorgang mittels einer der wenigstens einen Falzrolle auf einen Falzflansch ausgeübten Falzkraft ausgebildet ist. Vorteilhafterweise wird das Verbindungselement als zentrales Element des Falzroboters, insbesondere ein Zwischenstück des Verbindungselements oder das vollständige Verbindungselement, zum Messkörper, der mittels des wenigstens einen Sensorelements, insbesondere mittels applizierter Dehnungsmessstreifen, die Falzkraft messen kann, wodurch die Kraftmessung vorteilhafterweise unabhängig von der Rollenkonfiguration möglich ist. Dadurch, dass somit vorteilhafterweise ein vollständiges Stück der Verbindung zwischen Anbindungselement und Kopfelement als Messkörper ausgebildet ist, ist der Messkörper mit den dem Messkörper zugeordneten Sensorelementen vorteilhafterweise für eine präzise Erfassung einer von einer Falzrolle auf einen Falzflansch ausgeübten Falzkraft ausgebildet, und vorteilhafterweise auch ausgebildet, die Wirkrichtung einer Kraft zu erfassen. Der Messkörper und das wenigstens eine Sensorelement bilden dabei vorteilhafterweise eine Sensoreinheit zur Erfassung einer Falzkraft während eines Falzvorgangs. Vorteilhafterweise lassen sich aufgrund der Ausgestaltung des Messkörpers als Zwischenelement zwischen Anbindungselement und Kopfelement insbesondere einer diskreten Anzahl von vordefinierten Messpunkten jeweils Kraftvektoren für die jeweils erfasste Falzkraft zuordnen. Vorteilhafterweise wird somit nicht nur ein reiner Betragswert für die Falzkraft ermittelt, sondern insbesondere auch eine Wirkrichtung der Falzkraft. Insbesondere ist vorgesehen, dass der Falzroboter mehrere Falzrollen umfasst, die vorzugsweise sternförmig an dem Kopfelement angeordnet sind. Vorteilhafterweise umfasst der Falzroboter eine Mehrzahl von unterschiedlich ausgebildeten Falzrollen, die an dem Kopfelement angeordnet sind, wobei der Falzroboter vorteilhafterweise ausgebildet ist, mittels der unterschiedlich ausgebildeten Falzrollen unterschiedliche Falzvorgänge auszuführen.

Die wirkende Falzkraft wird dabei insbesondere von der für den Falzroboter vorgegebenen Bewegungsbahn des Roboters, fortlaufend nachfolgend insbesondere auch Falzbahn genannt, beeinflusst. Einen zusätzlichen auf eine Falzrolle wirkenden Aktuator, mit dem die Falzkraft darüber hinaus variiert werden könnte, umfasst der Falzroboter vorteilhafterweise nicht, was den Falzroboter vorteilhafterweise günstiger, robuster und somit weniger störungsanfällig macht.

Die Falzkraft, die eine jeweilige Falzrolle auf einen Falzflansch ausübt, wird dabei vorteilhafterweise jeweils mittels des Messkörpers und dem wenigstens einen daran angeordneten Sensorelement erfasst. Insbesondere ist eine Ausgestaltung vorgesehen, bei der der Messkörper genau ein Sensorelement umfasst. Mehrere Sensorelemente können insbesondere vorgesehen sein, um das Messergebnis zu verbessern. Mehrere Sensorelemente sind aber nicht erforderlich, um jeder Falzrolle ein Sensorelement zuordnen zu können. Insbesondere ist eine aus dem Messkörper und dem wenigstens einen Sensorelement, insbesondere einem Sensorelement, gebildete Sensoreinheit für eine Mehrzahl von Falzrollen vorgesehen, und ist vorteilhafterweise eingerichtet, für diese eine jeweilige Falzkraft für einen Falzvorgang zu erfassen.

Gemäß einer besonders vorteilhaften Ausgestaltung ist der Messkörper elastisch verformbar ausgebildet, insbesondere elastisch verformbar in alle drei Raumrichtungen, also insbesondere in eine X-Richtung, eine Y-Richtung und eine Z-Richtung. Das wenigstens eine Sensorelement, insbesondere eine Mehrzahl von Sensorelementen, ist dabei vorteilhafterweise zur Erfassung einer elastischen Verformung des Messkörpers ausgebildet. Durch die Verformbarkeit in alle drei Raumrichtungen, kann vorteilhafterweise für eine wirkende Falzkraft ein Kraftvektor bestimmt werden, und somit vorteilhafterweise neben dem Betrag für eine wirkende Kraft auch eine Wirkrichtung der Kraft. Als Sensorelemente zur Kraftmessung sind insbesondere Dehnungsmessstreifen vorgesehen, insbesondere Dehnungsmesstreifen mit Messverstärker. Insbesondere ist vorgesehen, dass das Sensorelement ein den piezoelektrischen Effekt nutzendes Sensorelement, ein den (piezo-)resistiven Effekt nutzendes Sensorelement, eine den thermoresistiven Effekt nutzende Sensoreinheit, ein den magnetoresistiven Effekt nutzendes Sensorelement, ein den magnetostriktiven Effekt nutzendes Sensorelement, ein den Hall-Effekt nutzendes Sensorelement, ein den induktiven Effekt nutzendes Sensorelement und/oder ein den kapazitiven Effekt nutzendes Sensorelement ist. Das Sensorelement kann somit insbesondere anstatt mit Dehnungsmessstreifen auch auf Grundlage anderer bekannter physikalischer Prinzipien ausgeführt werden, insbesondere auch als Schwingsaitensensor.

Eine weitere vorteilhafte Ausgestaltung des Falzroboters sieht vor, dass das Verbindungselement, insbesondere der Messkörper, säulenförmig ausgebildet ist. Durch die Austauschbarkeit des Elements "Säule" und die praktisch bauraumgleiche Realisierung der Kraftmessung mittels des Messkörpers und des wenigstens einen Sensorelements, ist vorteilhafterweise die Nachrüstbarkeit "alter" Systeme gegeben. Zudem lassen sich bei einer säulenförmigen Ausgestaltung bei einem Falzvorgang auf den Messkörper wirkende Verformungen besonders gut erfassen.

Weiter vorteilhaft ist der Messkörper für die Messung geometrisch optimiert ausgelegt. Insbesondere ist der Messkörper aus miteinander verbundenen Streben gebildet, die insbesondere eine Gerüststruktur bilden. Besonders vorteilhaft können bei einer solchen Ausgestaltung elastische Verformungen an den Knotenpunkten der Streben verbessert erfasst werden. Vorteilhafterweise kann eine Falzkraft somit mit weiter verbesserter Präzision erfasst werden.

Gemäß einer weiteren vorteilhaften Ausgestaltung weist das Verbindungselement einen ersten Verbindungsabschnitt und einen zweiten Verbindungsabschnitt auf, wobei das Verbindungselement vorteilhafterweise über den ersten Verbindungsabschnitt mit dem Anbindungselement verbunden ist und über den zweiten Verbindungsabschnitt mit dem Kopfelement verbunden ist. Die Verbindungsabschnitte stellen insofern vorteilhafterweise die Verbindungsschnittstellen zu dem Anbindungselement, das insbesondere als Andockplatte ausgebildet sein kann, und dem Kopfelement dar. Der Messkörper ist vorteilhafterweise der Teil des Verbindungselementes zwischen dem ersten Verbindungsabschnitt und dem zweiten Verbindungsabschnitt.

Eine weitere vorteilhafte Ausgestaltung sieht vor, dass dem Falzroboter eine Recheneinheit zugeordnet ist. Vorteilhafterweise ist die Recheneinheit ausgebildet, von dem wenigstens einen Sensorelement bereitgestellte Sensorsignale zu erfassen und zu verarbeiten, insbesondere für eine Bestimmung eines Falzkraftverlaufs. Weiter vorteilhaft wird mittels der Recheneinheit der Falzvorgang gesteuert, insbesondere die aufgebrachte Falzkraft. Vorteilhafterweise wird mittels der Recheneinheit dabei wenigstens eine Aktuatoreinheit zur Ausführung eines Falzvorgangs angesteuert. Weiter vorteilhaft umfasst die Recheneinheit einen Messverstärker für die von dem wenigstens einen Sensorelement bereitgestellten Sensorsignale. Insbesondere ist vorgesehen, dass der Falzroboter die Recheneinheit umfasst, wobei die Recheneinheit insbesondere an dem Anbindungselement angeordnet sein kann. Gemäß einer Ausgestaltungsvariante ist vorgesehen, dass die dem Falzroboter zugeordnete Recheneinheit von dem Falzroboter entfernt angeordnet ist, wobei die Recheneinheit über eine Kommunikationsverbindung für eine Übertragung von Daten mit dem Falzroboter verbunden ist. Die Kommunikationsverbindung kann dabei eine drahtgebundene oder eine drahtlose Verbindung, insbesondere eine Funkverbindung, weiter insbesondere eine Infrarot, Bluetooth^{®} oder WLAN (WLAN: Wireless Local Area Network) nutzende Verbindung, sein. Insbesondere sieht eine Ausgestaltungsvariante vor, dass der Falzroboter über das Internet mit der Recheneinheit verbunden ist.

Weiter vorteilhaft ist in der Recheneinheit ein Kraftverlauf einer Falzkraft für einen jeweiligen Falzvorgang hinterlegbar. Als Kraftverlauf ist dabei insbesondere ein initialer Kraftverlauf hinterlegt, insbesondere durch Speichern der Parameter für einen ersten initialen Falzvorgang. Insbesondere ist die Recheneinheit dabei ausgebildet, den initialen Kraftverlauf auf das Einhalten von vorgebbaren Grenzwerten für die Falzkraft auszuwerten. Vorteilhafterweise ist der Falzroboter, insbesondere die Recheneinheit des Falzroboters, weiter ausgebildet, unter Berücksichtigung des Ergebnisses der Auswertung die Steuerparameter für die Durchführung des Falzvorgangs anzupassen, sodass die Grenzwerte eingehalten werden oder zumindest Überschreitungen von Grenzwerten seltener auftreten.

Vorteilhafterweise ist in der Recheneinheit ein Soll-Kraftverlauf einer Falzkraft für einen vorgegebenen Falzvorgang hinterlegt. Der hinterlegte Soll-Kraftverlauf kann dabei insbesondere eine Kopie eines zuvor durchgeführten realen Kraftverlaufs sein, insbesondere eines realen Kraftverlaufs, der festgelegte Sollvorgaben erfüllt. Die Recheneinheit ist dabei vorteilhafterweise weiter ausgebildet, aus den erfassten Sensorsignalen einen Ist-Falzkraftverlauf der Falzkraft für einen Falzvorgang zu erfassen und insbesondere eine mittels einer der wenigstens einen Falzrolle aufgebrachten Falzkraft für einen nachfolgenden Falzvorgang derart anzupassen, insbesondere durch eine geänderte Ansteuerung des Falzroboters anzupassen, weiter insbesondere durch eine Anpassung der von dem Roboter ausgeführten Falzbahn, dass der Falzkraftverlauf während des Falzvorgangs möglichst dem Soll-Kraftverlauf entspricht. Vorteilhafterweise lässt sich so eine hohe Qualität des Falzvorgangs sicherstellen. Zudem wird durch diese zeitversetzte Kraftregelung eine Überlastung, insbesondere eine dauerhafte Überlastung, der mechanischen Komponenten verhindert und ein idealisierter Kraftverlauf kann vorteilhafterweise eingehalten werden. Darüber hinaus muss vorteilhafterweise keine Echtzeit-Reaktion des Systems in Normalbetrieb realisiert werden. Vorteilhafterweise ist die Recheneinheit weiter dazu ausgebildet, dass die Steuerparameter zu einem aktuellen Ist-Kraftverlauf, der einem Soll-Kraftverlauf innerhalb vorgegebener Toleranzen entspricht, als Soll-Steuerparameter hinterlegt werden, insbesondere solange ein durch diese Soll-Steuerparameter hervorgerufener Ist-Kraftverlauf nicht unzulässig von dem Soll-Kraftverlauf abweicht. Vorteilhafterweise werden dann neue Steuerparameter, die wiederum zu einem akzeptablen Ist-Kraftverlauf führen, als neue Soll-Steuerparameter hinterlegt. Die Recheneinheit ist vorteilhafterweise ausgebildet, dies zu überwachen und entsprechend auszuführen. Vorteilhafterweise wird durch die Heranführung des Ist-Kraftverlaufs an den Soll-Kraftverlauf die Falzbahn des Roboters optimiert.

Eine weitere vorteilhafte Ausgestaltung sieht vor, dass die Recheneinheit weiter ausgebildet ist, eine bei einem Falzvorgang aufgetretene Überlast in Bezug auf den Falzroboter, insbesondere eine Überlast in Bezug auf wenigstens eine Komponente des Falzroboters, weiter insbesondere eine Überlast in Bezug auf die den Falzvorgang ausführende Falzrolle des Falzroboters, durch Auswertung der Sensorsignale zu erkennen. Insbesondere ist die Recheneinheit weiter ausgebildet, eine mittels einer der wenigstens einen Falzrolle aufgebrachte Falzkraft für einen nachfolgenden Falzvorgang derart anzupassen, dass eine dauerhafte Überlast in Bezug auf den Falzroboter verhindert wird. Vorteilhafterweise lässt sich so ein Verschleiß von Komponenten des Falzroboters reduzieren und somit eine Standzeit des Falzroboters erhöhen.

Gemäß einer weiteren vorteilhaften Ausgestaltung umfasst der Falzroboter eine Kommunikationsschnittstelle, die vorteilhafterweise ausgebildet ist, von dem wenigstens einen Sensorelement erfasste Sensorsignale über ein Kommunikationsnetzwerk an eine entfernte Recheneinheit zu übertragen. Die entfernte Recheneinheit kann dabei die dem Falzroboter zugeordnete Recheneinheit sein. Die entfernte Recheneinheit kann aber insbesondere auch eine weitere Recheneinheit sein, mit der insbesondere Remote-Maintenance-Funktionen in Bezug auf den Falzroboter, weiter insbesondere in Bezug auf einen von dem Falzroboter ausgeführten Falzvorgang, durchgeführt werden können. Die entfernte Recheneinheit kann insbesondere als Cloud-Anwendung realisiert sein. Insbesondere ist die entfernte Recheneinheit dabei für Wartungs- und Konfigurationsaufgaben in Bezug auf den Falzroboter eingerichtet, wobei insbesondere mittels der entfernten Recheneinheit ein Falzvorgang angepasst werden kann, insbesondere hinsichtlich eines verbesserten Falzergebnisses und/oder eines Überlastschutzes von Komponenten des Falzroboters durch Verhindern eines regelmäßigen wiederholten Auftretens von zu hohen Kräften bei der Durchführung eines Falzvorgangs.

Weiter vorteilhaft ist der Falzroboter ausgebildet, gemäß einem erfindungsgemäß ausgebildeten Verfahren zum Betreiben eines Falzroboters betrieben zu werden.

Das des Weiteren vorgeschlagene Verfahren zum Modernisieren eines Falzroboters mit einem Roboterfalzkopf, umfassend ein Anbindungselement, ein erstes Verbindungselement, ein Kopfelement und wenigstens eine Falzrolle, wobei das erste Verbindungselement zwischen dem Anbindungselement und dem Kopfelement angeordnet ist, und die wenigstens eine Falzrolle an dem Kopfelement angeordnet ist, sieht vor, dass das erste Verbindungselement entfernt und durch ein zweites Verbindungselement ersetzt wird, wobei zumindest ein Teil des zweiten Verbindungselements als Messkörper ausgestaltet ist, wobei der Messkörper mit wenigstens einem an dem Messkörper angeordneten Sensorelement zur Erfassung von bei einem Falzvorgang mittels einer der wenigstens einen Falzrolle auf einen Falzflansch ausgeübten Kraft ausgebildet ist. Insbesondere ist dabei vorgesehen, dass durch die Modernisierung aus einem "alten" Falzroboter ein erfindungsgemäß ausgebildeter Falzroboter geschaffen wird. Insofern können vorteilhafterweise "alte" Falzroboter zu einem großen Teil mit dann erweitertem Funktionsumfang weiterverwendet werden. Da selbst dann, wenn der "alte" Falzroboter mehrere Falzrollen umfasst, nur das erste Verbindungselement, also das "alte" Verbindungselement, gegen das zweite Verbindungselement, also das "neue" Verbindungselement, getauscht werden muss, ist die Modernisierung vorteilhafterweise vergleichsweise einfach durchführbar. Insbesondere wird bei dem Verfahren zum Modernisieren eines Falzroboters auch eine Recheneinheit bereitgestellt, die ausgebildet ist, von dem wenigstens einen Sensorelement bereitgestellte Sensorsignale zu erfassen und zu verarbeiten, insbesondere wie im Zusammenhang mit den Ausgestaltungen eines erfindungsgemäß ausgebildeten Falzroboters beschrieben. Insbesondere ist vorgesehen, die Recheneinheit an dem Anbindungselement anzuordnen, insbesondere anzuschrauben. Gemäß einer Ausgestaltungsvariante wird die Recheneinheit in das Anbindungselement oder in das Verbindungselement integriert. Vorteilhafterweise wird die Recheneinheit mit einer Steuereinheit zur Steuerung des Falzroboters zur Übertragung von Daten verbunden und die Steuereinheit entsprechend angepasst, um basierend auf Daten der Recheneinheit einen Falzvorgang anpassen zu können, insbesondere zur Annäherung an einen Soll-Kraftverlauf und/oder zur Vermeidung von dauerhaften Überlasten von Komponenten des Falzroboters bei der Ausführung von Falzvorgängen.

Das ebenfalls zur Lösung der eingangs genannten Aufgabe vorgeschlagene Verfahren zum Betreiben eines Falzroboters mit einem Roboterfalzkopf, wobei der Roboterfalzkopf ein Anbindungselement, ein Verbindungselement, ein Kopfelement und wenigstens eine Falzrolle umfasst, wobei das Verbindungselement zwischen dem Anbindungselement und dem Kopfelement angeordnet ist, und die wenigstens eine Falzrolle an dem Kopfelement angeordnet ist, sieht vor, dass während eines Falzvorgangs eine elastische Verformung des Verbindungselements erfasst wird, wobei die elastische Verformung insbesondere in alle drei Raumrichtungen erfolgen kann, und aus der erfassten elastischen Verformung eine bei dem Falzvorgang mittels einer Falzrolle des Falzroboters auf einen Falzflansch ausgeübte Falzkraft bestimmt wird, insbesondere ein die Falzkraft repräsentierender Kraftvektor. Vorteilhafterweise muss dabei nicht jeder Falzrolle des Falzroboters eine eigene Sensorik zugeordnet werden. Weiter vorteilhaft kann durch die bestimmte Falzkraft ein Falzvorgang verbessert gesteuert werden und somit insbesondere zu einer Qualitätssicherung beigetragen werden. Vorteilhafterweise wird für eine auf einen Falzflansch ausgeübte Falzkraft ein Kraftvektor bestimmt, sodass vorteilhafterweise die Falzkraft nicht nur betragsmäßig bestimmt wird, sondern auch die Wirkrichtung der Falzkraft bestimmt wird.

Gemäß einer vorteilhaften Ausgestaltung des Verfahren ist vorgesehen, dass bei einem Falzvorgang eine Falzrolle des Falzroboters gemäß vorgegebenen Bahnpunkten an einem Bauteil entlang bewegt wird. Dabei wird die bei dem Falzvorgang bestimmte Falzkraft vorteilhafterweise den jeweiligen Bahnpunkten zur Ermittlung eines Falzkraftverlaufs zugeordnet. Vorteilhafterweise werden die für die Falzkraft ermittelten Werte gespeichert, insbesondere mit den jeweiligen Bahnpunkten als Wertepaare. Insbesondere wird jedem Bahnpunkt ein Kraftvektor als Falzkraft zugeordnet. Vorteilhafterweise können durch Auswertung des so ermittelten Falzkraftverlaufs Fehler und/oder Überbelastungen frühzeitig erkannt werden.

Eine vorteilhafte Weiterbildung des Verfahrens sieht vor, dass der ermittelte Ist-Falzkraftverlauf mit einem für den Falzvorgang vorgegebenen Soll-Falzkraftverlauf verglichen wird. Weiter vorteilhaft werden Abweichungen zwischen dem ermittelten Ist-Falzkraftverlauf und dem Soll-Falzkraftverlauf für die jeweiligen Bahnpunkte ermittelt. Vorteilhafterweise kann so erkannt werden, wenn Vorgaben für den Falzvorgang nicht erfüllt werden. Weiter vorteilhaft kann anhand der ermittelten Abweichungen der Falzvorgang so optimiert werden, dass die Abweichungen gegen Null gehen, insbesondere aber Überlastungen vermieden werden, weiter insbesondere dauerhafte Überbelastungen vermieden werden. Vorteilhafterweise wird für diese Optimierung des Falzvorgangs die Falzbahn des Roboters mithilfe des erfassten Ist-Falzkraftverlaufs angepasst, insbesondere geregelt.

Besonders vorteilhaft ist vorgesehen, dass für einen nachfolgenden Falzvorgang die von der Falzrolle auf den Falzflansch ausgeübte Falzkraft derart angepasst wird, insbesondere durch eine angepasste Ansteuerung des Falzroboters, dass die in Bezug auf den zuvor durchgeführten Falzvorgang ermittelten Abweichungen reduziert werden. Eine angepasste Ansteuerung des Falzroboters umfasst insbesondere auch eine Änderung von Parametern der Robotersteuerung, insbesondere eine Änderung von Parametern, die eine Veränderung der Falzbahn zur Folge haben, wie insbesondere eine Anpassung des Offsets. Vorteilhafterweise ist durch die Anpassung der auf den Falzflansch ausgeübten Falzkraft eine zeitversetzte Kraftregelung realisiert, die vorteilhafterweise durch eine entsprechend angepasste Steuerung des Roboters umgesetzt wird. Insbesondere wird eine zur Steuerung des Falzroboters vorgegebene Falzbahn insofern zur Anpassung eines Ist-Kraftverlaufs an einen Soll-Kraftverlauf optimiert, insbesondere durch eine entsprechende die Falzbahn beeinflussende Regelung, die insbesondere mit der Recheneinheit des Falzroboters Regelungsdaten austauscht. Weiter insbesondere ist zur Beeinflussung der Falzbahn gemäß einer Ausgestaltungsvariante vorgesehen, dass wenigstens ein Parameter, insbesondere der Offset, verändert wird, und diese Veränderung des wenigstens einen Parameters, insbesondere des Offsets, auf die Steuerung des Roboters kopiert wird, und somit bei dieser Ausgestaltungsvariante insbesondere kein direkter Austausch zwischen Roboter und mittels des Messkörpers erfolgter Kraftmessung erfolgt. Dauerhafte Überlastungen der mechanischen Komponenten des Falzroboters lassen sich durch die Anpassung des Kraftverlaufs, insbesondere durch die Heranführung des Ist-Kraftverlaufs an den Soll-Kraftverlauf, verhindern. Darüber hinaus lassen sich Falzverbindungen hoher und gleichbleibender Qualität erreichen. Weiter vorteilhaft lässt sich so ein an einen vorgegebenen idealisierten Soll-Falzkraftverlauf angepasster Falzkraftverlauf realisieren, ohne hierfür ein echtzeitfähiges Regelsystem bereitstellen zu müssen.

Vorteilhafterweise wird durch das vorgeschlagene Verfahren eine Kraftregelung derart realisiert, dass zunächst eine während eines Falzvorgangs gemessene Falzkraft mit zugehörigen Bahnpunkten gespeichert wird. Nach dem Falzvorgang wird der so resultierende Kraftverlauf vorteilhafterweise mit einer für diesen Falzvorgang vorgegebenen idealisierten Kraftkurve entsprechend einer Nutzervorgabe abgeglichen. Im darauffolgenden Schritt wird der nächste Falzvorgang und dabei die von der Falzrolle ausgeübte Falzkraft auf Grundlage der ermittelten Abweichungen von der idealisierten Kraftkurve vorteilhafterweise derart angepasst, dass die Abweichungen im nächsten Schritt minimiert werden. Die Anpassung des Falzvorgangs erfolgt also vorteilhafterweise erst im nachfolgenden Zyklus. Die Anpassung der von der Falzrolle beim Falzen ausgeübten Falzkraft erfolgt insbesondere durch eine Anpassung der Steuerungsparameter, mit denen die Aktuatoren des Falzroboters beim Falzen gesteuert werden.

Gemäß einer weiteren vorteilhaften Ausgestaltung des Verfahrens ist vorgesehen, dass für einen durchgeführten Falzvorgang anhand der bestimmten Falzkraft ein Auftreten einer Überlast in Bezug auf den Falzroboter geprüft wird, insbesondere von der dem Falzroboter zugeordneten Recheneinheit. Bei einer erkannten Überlast wird ein nachfolgender Falzvorgang zur Vermeidung der Überlast vorteilhafterweise angepasst, insbesondere durch eine Anpassung der Steuerungsparameter, mit denen die Aktuatoren des Falzroboters beim Falzen gesteuert werden. Vorteilhafterweise wird hierdurch der Verschleiß des Falzroboters verringert und die Standzeit des Roboters erhöht.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer schematischen Darstellung ein Ausführungsbeispiel für einen erfindungsgemäß ausgebildeten Falzroboter;
- Fig. 2: in einer perspektivischen Darstellung ein Ausführungsbeispiel für einen Roboterfalzkopf eines erfindungsgemäß ausgebildeten Falzroboters;
- Fig. 3: in einer perspektivischen Darstellung einen Ausschnitt eines weiteren Ausführungsbeispiels für einen Roboterfalzkopf eines erfindungsgemäß ausgebildeten Falzroboters;
- Fig. 4a bis Fig. 4c: jeweils in einer Diagrammdarstellung ein Ausführungsbeispiel für eine erfindungsgemäß erfasste Falzkraft 5 über einer Weg s;
- Fig. 5: anhand eines Blockschaltbildes ein Ausführungsbeispiel für ein erfindungsgemäß ausgebildetes Verfahren zum Betreiben eines Falzroboters; und
- Fig. 6: in einer perspektivischen Darstellung ein Ausführungsbeispiel für ein Verbindungselement eines Roboterfalzkopfs eines erfindungsgemäß ausgebildeten Falzroboters.

In den verschiedenen Figuren sind gleiche Teile in der Regel mit den gleichen Bezugszeichen versehen und werden daher mitunter auch jeweils nur im Zusammenhang mit einer der Figuren erläutert.

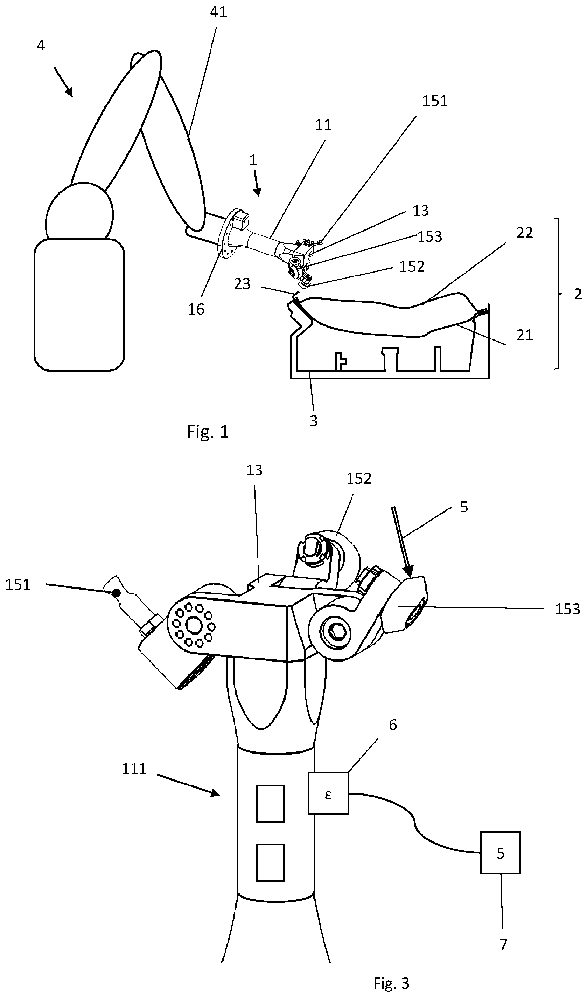

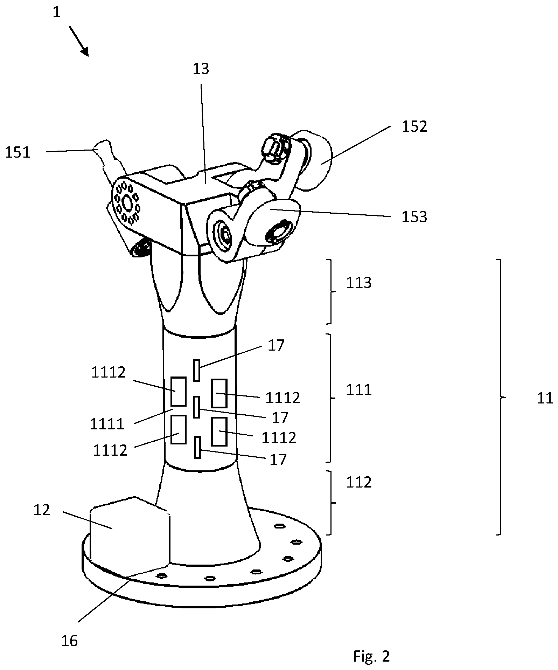

Fig. 1 zeigt in einer schematischen Darstellung einen Falzroboter 4, der zur Ausführung eines Falzvorgangs ausgebildet ist. Der Roboter 4 umfasst einen gelenkig ausgebildeten Roboterarm 41, an dessen Ende ein Roboterfalzkopf 1 angeordnet ist. Eine vorteilhafte Ausgestaltung des Roboterfalzkopfs 1 ist in Fig. 2 dargestellt. Der Roboterfalzkopf 1 umfasst ein Anbindungselement 16, ein Verbindungselement 11, ein Kopfelement 13 und eine erste Falzrolle 151, eine zweite Falzrolle 152 und eine dritte Falzrolle 153, die jeweils an dem Kopfelement 13 angeordnet sind. Das Verbindungselement 11 ist zwischen dem Anbindungselement 16 und dem Kopfelement 13 angeordnet ist. Das Verbindungselement 11 ist dabei als Messkörper ausgestaltet, wobei der Messkörper mit wenigstens einem an dem Messkörper angeordneten Sensorelement (in Fig. 1 nicht explizit dargestellt) zur Erfassung von bei einem Falzvorgang mittels einer der Falzrollen 151, 152, 153 auf einen Falzflansch ausgeübten Falzkraft ausgebildet ist. Der Messkörper bildet dabei zusammen mit dem wenigstens einen Sensorelement eine Sensoreinheit zur Erfassung der Falzkraft. Mit den Falzrollen 151, 152, 153 kann eine auf einem Falzbett 3 angeordnetes Bauteilanordnung 2 gemäß einem vorgegebenen Falzvorgang gefalzt werden. Die Bauteilanordnung 2 umfasst dabei ein erstes Bauteil 21 und ein zweites Bauteil 22. Durch Umkanten eines Bauteilrandes 23 des ersten Bauteils 21 mittels einer der Falzrollen 151, 152, 153 werden das erste Bauteil 21 und das zweite Bauteil 22 zusammengefügt. Weitere Details einer vorteilhaften Ausgestaltung des Roboterfalzkopfes 1 werden unter Bezugnahme auf Fig. 2 erläutert.

Wie in Fig. 2 beispielhaft dargestellt, umfasst der Roboterfalzkopf 1 ein Anbindungselement 16, ein Verbindungselement 11, ein Kopfelement 13 und mehrere Falzrollen 151, 152, 153, wobei das Verbindungselement 11 zwischen dem Anbindungselement 16 und dem Kopfelement 13 angeordnet ist, und die Falzrollen 151, 152, 153 an dem Kopfelement 13 angeordnet sind. Die Falzrollen 151, 152, 153 sind dabei unterschiedlich ausgebildet und sternförmig an dem Kopfelement 13 angeordnet, wobei der Falzroboter 4 ausgebildet ist, mittels der unterschiedlich ausgebildeten Falzrollen 151,152,153 unterschiedliche Falzvorgänge auszuführen, insbesondere an unterschiedliche Bauteilanordnungen 2 und unterschiedliche Bauteilgeometrien angepasste Falzvorgänge. Ein Teil des Verbindungselements 11 des Roboterfalzkopfs 1, das ein vollständiges Zwischenstück des Verbindungselements 11 bildet, ist als Messkörper 111 ausgestaltet, wobei an dem Messkörper 111 mehrere Sensorelemente 17, insbesondere mehrere Dehnungsmessstreifen mit vorzugsweise unterschiedlicher Ausrichtung, angeordnet sind. Der Messkörper 111 bildet dabei mit den Sensorelementen 17 eine Sensoreinheit, die zur Erfassung von bei einem Falzvorgang mittels einer der Falzrollen 151, 152, 153 auf einen Falzflansch ausgeübten Falzkraft ausgebildet ist. Wie in Fig. 2 gezeigt, ist in diesem Ausführungsbeispiel der Messkörper 111 säulenförmig ausgebildet. Darüber hinaus ist der Messkörper 111 elastisch verformbar ausgebildet, wobei die an dem Messkörper 111 angebrachten Sensorelemente (17) zur Erfassung einer elastischen Verformung des Messkörpers 111 ausgebildet sind. Der Messkörper 111 ist in diesem Ausführungsbeispiel durch Ausnehmungen 1112 und Streben 1111 fachwerkartig aufgebaut und weist ein definiertes elastisches Verformungsverhalten auf, sodass auftretende Verformungen vorteilhafterweise eindeutig konkreten Falzkräften zugeordnet werden können.

Das Anbindungselement 16 des Roboterfalzkopfs 1 ist in diesem Ausführungsbeispiel als Andockplatte ausgebildet, mit der der Roboterfalzkopf 1 an dem Roboterarm 41, wie in dem Ausführungsbeispiel in Fig. 1 gezeigt, angeordnet werden kann. An dem Anbindungselement 16 ist eine Recheneinheit 12 angeordnet, die ausgebildet ist, von den Sensorelementen 17 bereitgestellte Sensorsignale zu erfassen und zu verarbeiten. Die Recheneinheit 12 umfasst dabei in diesem Ausführungsbeispiel eine Mikroprozessoreinheit sowie einen Messverstärker (Mikroprozessoreinheit und Messverstärker in Fig. 2 nicht explizit dargestellt) zur Verarbeitung der an dem Messkörper 111 aufgezeichneten (Dehnungs-)Signale. In der Recheneinheit 12 ist zudem jeweils ein Soll-Kraftverlauf einer Falzkraft für vorgegebene Falzvorgänge hinterlegt, und dazu in einer entsprechenden Speichereinheit der Mikroprozessoreinheit gespeichert. Darüber hinaus ist eine untere Toleranzgrenze TH1 und eine obere Toleranzgrenze TH2 in Bezug auf den Soll-Kraftverlauf gespeichert. Des Weiteren ist ein Überlast-Schwellwert TH3, dessen dauerhaftes Überschreiten zu einer Überlastung des Falzroboters 4 führen würde, hinterlegt. Die Recheneinheit 12 ist dabei ausgebildet, aus den erfassten Sensorsignalen einen Ist-Kraftverlauf der Falzkraft bei einem Falzvorgang zu erfassen. Dabei ist vorgesehen, dass bei der Durchführung eines Falzvorgangs, wobei eine der Falzrollen 151, 152, 153 des Roboterfalzkopfs 1 gemäß vorgegebenen Bahnpunkten an einer Bauteilanordnung 2 entlang bewegt wird, für die jeweiligen Bahnpunkte die Falzkraft bestimmt wird, und die Bahnpunkte mit den erfassten Werten für die Falzkraft als Wertepaare gespeichert werden. Aus diesem gespeicherten Wertepaaren ergibt sich dann der Ist-Kraftverlauf.

Die Recheneinheit 12 ist weiter ausgebildet, den erfassten Ist-Kraftverlauf mit dem in der Recheneinheit 12 hinterlegten Soll-Kraftverlauf zu vergleichen und Abweichungen, insbesondere Abweichungen, bei denen die untere Toleranzgrenze TH1 unterschritten wird oder die obere Toleranzgrenze TH2 überschritten wird, zu erfassen. Unter Berücksichtigung dieser erfassten Abweichungen, wird unter Nutzung der Recheneinheit 12 ein nachfolgender Falzvorgang derart angepasst, dass der dann erfasste Ist-Kraftverlauf stärker an den Soll-Kraftverlauf angepasst ist, insbesondere derart, dass die untere Toleranzgrenze TH1 nicht unterschritten wird und die obere Toleranzgrenze TH2 nicht überschritten wird. Insbesondere ist dabei vorgesehen, dass die Recheneinheit 12 zur Ansteuerung der entsprechenden Aktuatoren des Falzroboters 4 ausgebildet ist. Insbesondere kann aber auch vorgesehen sein, dass dem Roboter 4 eine Steuereinheit zugeordnet ist, mit der die Aktuatoren des Roboters 4 und somit der Falzvorgang gesteuert wird, wobei dieser Steuereinheit dann die Ergebnisse der Recheneinheit 12 weitergeleitet werden, insbesondere die erfassten Abweichungen, sodass die Steuereinheit den Roboter 4 entsprechend dem Ergebnis der Auswertung der Recheneinheit 12 steuern kann.

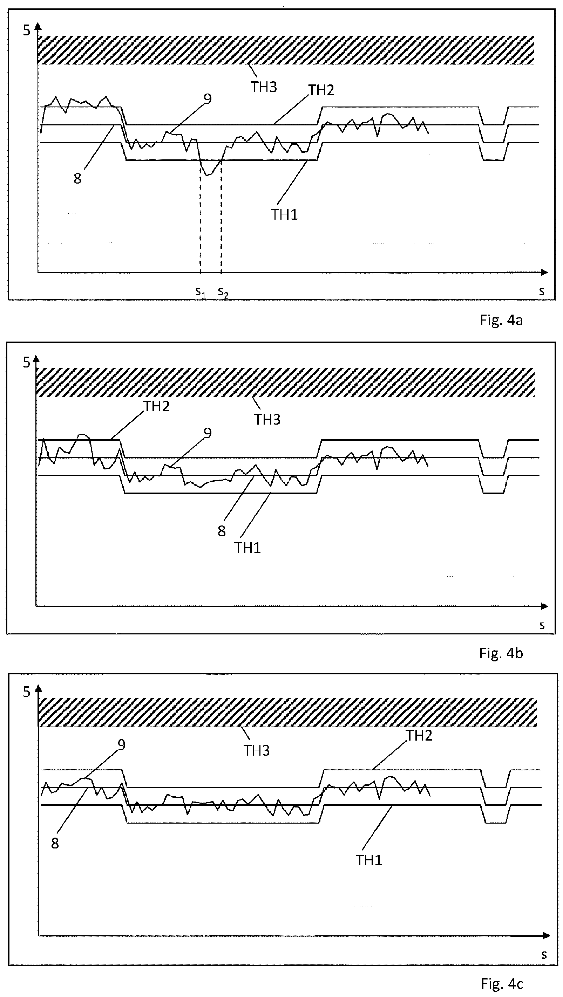

Fig. 3 zeigt ein weiteres Ausführungsbeispiel, wobei nur ein Teil des Roboterfalzkopfs 1 dargestellt ist. Dabei ist vorgesehen, dass der von der Recheneinheit 12 aus der erfassten Dehnung beziehungsweise elastischen Verformung 6 des zentralen Messkörpers 111 bestimmte Falzkraftverlauf auch an eine Wiedergabeeinrichtung 7 weitergeleitet wird, um für die auf eine Falzrolle 153 während eines Falzvorgangs wirkende Kraft 5 einen Ist-Kraftverlauf darzustellen. Die während eines Falzvorgangs wirkende Kraft 5 ist dabei in Fig. 3 als Vektor dargestellt. Damit wird verdeutlich, dass der Messkörper 111, der in diesem Ausführungsbeispiel ein vollständiges Zwischenstück zwischen dem Anbindungselement 16 und dem Kopfelement 13 bildet, mit den zugehörigen Sensorelementen 17 ausgebildet ist, sowohl einen Betrag der wirkenden Kraft 5 zu bestimmen und darüber hinaus ein Wirkrichtung der wirkenden Kraft 5 zu bestimmen. Ein Ist-Kraftverlauf 9 lässt sich so vorteilhafterweise verbessert an einen vorgegebenen Soll-Kraftverlauf anpassen. Insbesondere lässt sich so verbessert die Qualität des Falzergebnisses erhöhen. Beispiele für einen erfassten Ist-Kraftverlauf 9 sind in Fig. 4a, Fig. 4b und Fig. 4c dargestellt.

Die in Fig. 4a bis Fig. 4c dargestellten Ist-Kraftverläufe 9 folgen dabei zeitlich von Fig. 4a nach Fig. 4c aufeinander. Dargestellt ist dabei für dieselbe Falzrolle jeweils der Ist-Kraftverlauf 9 für einen Falzvorgang als Kraft 5 über den Weg S. Darüber hinaus sind in Fig. 4a bis Fig. 4c jeweils der in der Recheneinheit 12 hinterlegte Soll-Kraftverlauf 8, eine untere Toleranzgrenze TH1 für den Soll-Kraftverlauf 8, eine obere Toleranzgrenze TH2 für den Soll-Kraftverlauf 8 und, durch den Beginn der Schraffur, ein Überlast-Schwellwert TH3 dargestellt.

Die Recheneinheit 12 ist dabei ausgebildet zu erkennen, wenn der Ist-Kraftverlauf 9 den Überlast-Schwellwert TH3 überschreiten sollte (in Fig. 4a bis Fig. 4c nicht dargestellt). Bei einer solchen erkannten Überschreitung des Überlast-Schwellwerts TH3 ist insbesondere vorgesehen, dass zur Vermeidung von Schäden an Komponenten des Falzroboters 4 direkt eine Ansteuerung der Aktuatoren des Falzroboters 4 derart erfolgt, dass die Kraft reduziert wird. Insbesondere kann ergänzend eine Warnmeldung ausgegeben werden, insbesondere mittels einer Wiedergabeeinrichtung 7.

Darüber hinaus ist die Recheneinheit 12 ausgebildet, die Steuerungsparameter für die Steuerung des Falzroboters so zu beeinflussen, dass der Ist-Kraftverlauf 9 möglichst an den Soll-Kraftverlauf 8 angenähert wird. Dabei überwacht die Recheneinheit 12, ob bei einem Falzvorgang die untere Toleranzgrenze TH1 unterschritten wird oder die obere Toleranzgrenze TH2 überschritten wird oder der Überlast-Schwellwert TH3 überschritten wird, und passt für den darauffolgenden Falzvorgang die Steuerungsparameter und damit den Ist-Kraftverlauf 9 entsprechend an. Denn eine dauerhafte Überschreitung des Überlast-Schwellwerts TH3 kann zu einer mechanischen Überlastung der Komponenten des Falzroboters 4 sowie zu einem erhöhten Energiebedarf führen, und eine dauerhafte Unterschreitung der unteren Toleranzgrenze TH1 sowie eine dauerhafte Überschreitung der oberen Toleranzgrenze TH2 kann eine fehlerhafte Herstellung des Falzflansches bedeuten. Beispielhaft ist in Fig. 4a eine Unterschreitung der unteren Toleranzgrenze TH1 zwischen dem Wegpunkt S1 und dem Wegpunkt S2 dargestellt. Darüber hinaus sind in Fig. 4a zu Beginn des Falzvorgangs mehrere Überschreitungen der oberen Toleranzgrenze TH2 dargestellt. Durch entsprechende Steuerung sind für die nachfolgenden in Fig. 4b und Fig. 4c dargestellten Falzvorgänge die Ist-Kraftverläufe 9 derart angepasst, dass in Fig. 4b der Ist-Kraftverlauf 9 die obere Toleranzgrenze TH2 nur noch zwei Mal überschreitet und die untere Toleranzgrenze TH1 nicht unterschritten wird. Durch weitere Anpassung in dem nachfolgenden und in Fig. 4c dargestellten Falzvorgang ist der Ist-Kraftverlauf 9 soweit an den Soll-Kraftverlauf 8 angenähert, dass der Ist-Kraftverlauf 9 innerhalb der Toleranzgrenzen TH1, TH 2 liegt.

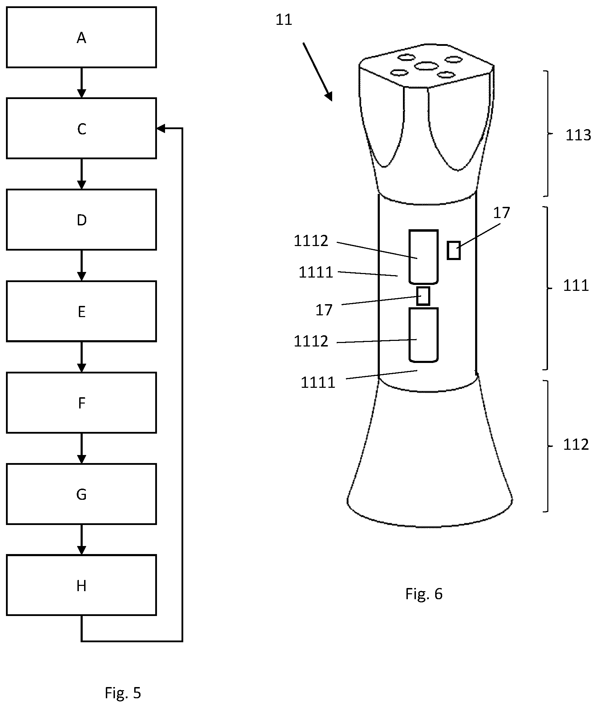

Fig. 5 zeigt beispielhaft anhand eines Ablaufdiagramms, wie ein Falzroboter, insbesondere ein Falzroboter 4, wie unter Bezugnahme auf Fig. 1 und Fig. 2 beschrieben, gemäß einem vorgeschlagenen Verfahren betrieben wird. Der Falzroboter umfasst dabei einen Roboterfalzkopf, wobei der Roboterfalzkopf ein Anbindungselement, ein Kopfelement, ein zwischen Anbindungselement und Kopfelement angeordnetes Verbindungselement und eine an dem Kopfelement angeordnete Falzrolle aufweist. Dem Falzroboter ist dabei eine Recheneinheit und eine Steuereinheit zugeordnet, wobei die Recheneinheit und die Steuereinheit eine gemeinsame Einheit bilden können. Zusammen mit der Recheneinheit und der Steuereinheit bildet der Falzroboter ein Robotersystem. In einem ersten Schritt A wird für einen Falzvorgang eine initiale Falzbahn festgelegt, die der Falzroboter mit der Falzrolle zum Fügen einer Bauteilanordnung abfahren soll. Die Falzbahn legt dabei die Wegstrecke der Falzrolle des Falzroboters entlang des zu erzeugenden Falzflansches sowie die aufgebrachte Falzkraft fest. Die initiale Falzbahn ergibt in diesem Ausführungsbeispiel einen ersten Ist-Falzkraftverlauf. In einem Schritt C beginnt dann der Falzvorgang mit dem Falzroboter. Während des Falzvorgangs wird in einem Verfahrensschritt D eine elastische Verformung des Verbindungselements des Roboterfalzkopfs erfasst. Aus der erfassten elastischen Verformung wird die bei dem Falzvorgang mittels der Falzrolle des Falzroboters auf den Falzflansch ausgeübte Falzkraft bestimmt und aufgezeichnet. Dazu ist insbesondere vorgesehen, dass die Falzrolle gemäß vorgegebenen Bahnpunkten, die die Falzbahn festlegen, an der Bauteilanordnung entlang bewegt wird, wobei die bestimmte Falzkraft den jeweiligen Bahnpunkten zur Ermittlung eines Ist-Falzkraftverlaufs zugeordnet wird. In einem Schritt E endet ein Falzvorgang. In einem Schritt F erfolgt eine Auswertung der aufgezeichneten Falzkraft. Dabei wird insbesondere der ermittelte Ist-Falzkraftverlauf mit dem für diesen Falzvorgang vorgegebenen Soll-Falzkraftverlauf verglichen. Abweichungen zwischen dem ermittelten Ist-Falzkraftverlauf und dem Soll-Falzkraftverlauf für die jeweiligen Bahnpunkte werden dabei im Rahmen der Auswertung ermittelt, wobei insbesondere durch Schwellwertvergleiche geprüft wird, ob die Abweichungen innerhalb festgelegter zulässiger Toleranzen liegen. Unter Berücksichtigung der ermittelten Abweichungen werden die Steuerparameter und wird somit die festgelegte Falzbahn in einem Schritt G angepasst, um die ermittelten Abweichungen für einen nachfolgenden Falzvorgang zu reduzieren und insbesondere dauerhafte Überlasten für Komponenten des Falzroboters zu vermeiden. In dem Schritt G werden somit insbesondere die Roboterbahnkorrekturen definiert. In einem Schritt H wird die so angepasste Falzbahn als neue Vorgabe für die Falzbahn festgelegt. Diese neue Falzbahn ersetzt somit die in dem Schritt A festgelegte initiale Falzbahn. In dem nachfolgenden Verfahrensschritt C erfolgt ein neuer Falzvorgang gemäß der neu festgelegten Falzbahn. Die weiteren Schritte D bis H schließen sich entsprechend an. Dabei kann selbstverständlich vorgesehen sein, dass die ermittelten Abweichungen so gering sind beziehungsweise innerhalb eines definierten Toleranzbereichs liegen, sodass dann keine Anpassung der Falzbahn erfolgt, sondern erst dann wieder, wenn die Abweichungen außerhalb des Toleranzbereichs liegen. In einem zusätzlichen optionalen Verfahrensschritt wird für einen durchgeführten Falzvorgang anhand der bestimmten Falzkraft ein Auftreten einer Überlast in Bezug auf den Falzroboter geprüft, und bei einer erkannten Überlast, bei der ebenfalls eine Abweichung außerhalb des Toleranzbereichs vorliegt, die Falzbahn zur Vermeidung der Überlast angepasst und vorzugsweise eine Warnhinweis ausgegeben.

Fig. 6 zeigt ein Ausführungsbeispiel für ein Verbindungselement 11 eines Roboterfalzkopfs 1 eines Falzroboters 4, wobei ein Teil des Verbindungselements 11 als Messkörper 111 in einer Gerüststruktur mit Streben 1111 ausgebildet ist. An den Messkörper 111 schließt sich jeweils ein erster Verbindungsabschnitt 112 und ein zweiter Verbindungsabschnitt 113 an, wobei das Verbindungselement 11 über das erste Verbindungselement 112 an ein Anbindungselement 16 eines Roboterfalzkopfs 1 und über das zweite Verbindungselement 113 an ein Kopfelement 13 eines Roboterfalzkopfs 1 angebunden werden kann. Wird bei einem Falzroboter ein herkömmliches Verbindungselement gegen dieses Verbindungselement 11 getauscht, erfolgt vorteilhafterweise eine Modernisierung des Falzroboters mit der Möglichkeit einer entsprechenden Falzkraftmessung. Eine entsprechende Recheneinheit wird ebenfalls im Rahmen der Modernisierung angeordnet und entsprechend angeschlossen. Insbesondere kann auch eine Signalverarbeitungseinheit mit einer Kommunikationsschnittstelle vorgesehen sein, wobei die von dem an dem Messkörper 111 angeordneten wenigstens einen Sensorelement 17 erfassten Sensorsignale dann an eine entfernte Recheneinheit gesendet werden können, beispielsweise über ein Mobilfunk-Modul, wobei die Sensorsignale beispielsweise für ein Remote-Maintenance-Funktion ausgewertet werden können.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Roboterfalzkopf
- 11: Verbindungselement
- 111: Messkörper
- 1111: Strebe des Messkörpers (111)
- 1112: Ausnehmung des Messkörpers (111)
- 112: erster Verbindungsabschnitt
- 113: zweiter Verbindungsabschnitt
- 12: Recheneinheit
- 13: Kopfelement
- 151: Falzrolle
- 152: Falzrolle
- 153: Falzrolle
- 16: Anbindungselement
- 17: Sensorelement
- 2: Bauteilanordnung
- 21: erstes Bauteil
- 22: zweites Bauteil
- 23: Bauteilrand
- 3: Falzbett
- 4: Falzroboter
- 41: Roboterarm
- 5: Falzkraft
- 6: elastische Verformung
- 7: Wiedergabeeinrichtung, insbesondere Bildwiedergabeeinrichtung
- 8: Soll-Kraftverlauf
- 9: Ist-Kraftverlauf
- TH1: untere Toleranzgrenze
- TH2: obere Toleranzgrenze
- TH3: Überlast-Schwellwert
- S1: erster Wegpunkt bei einem Falzvorgang
- S2: zweiter Wegpunkt bei einem Falzvorgang
- A: Initiale Falzbahn
- C: Beginn des Falzprozesses
- D: Aufzeichnung der Falzkraft
- E: Abschluss des Falzprozesses
- F: Auswertung der Falzkraft
- G: Anpassung der Falzbahn, insbesondere durch Definieren von Roboterbahnkorrekturen
- H: Festlegung der angepassten Falzbahn als neue vorgegebene Falzbahn

## Patentansprüche

1. Falzroboter (4), der zur Ausführung eines Falzvorgangs ausgebildet ist, mit einem Roboterfalzkopf (1) umfassend ein Anbindungselement (16), ein Verbindungselement (11), ein Kopfelement (13) und mehrere Falzrollen (151, 152, 153), wobei das Verbindungselement (11) zwischen dem Anbindungselement (16) und dem Kopfelement (13) angeordnet ist, und die wenigstens eine Falzrolle (151, 152, 153) an dem Kopfelement (13) angeordnet ist, **dadurch gekennzeichnet, dass** ein Zwischenstück des Verbindungselements (11) oder das vollständige Verbindungselement (11) als Messkörper (111) aus miteinander verbundenen Streben (1111), die eine Gerüststruktur bilden, ausgestaltet ist, wobei der Messkörper (111) mit wenigstens einem an dem Messkörper (111) angeordneten Sensorelement (17) eine Sensoreinheit bildet, die zur Erfassung von bei einem Falzvorgang mittels einer der mehreren Falzrollen (151, 152, 153) auf einen Falzflansch ausgeübten Falzkraft (5) ausgebildet ist, wobei der Messkörper (111) elastisch verformbar in alle drei Raumrichtungen ausgebildet ist, wobei durch eine Verformbarkeit in alle drei Raumrichtungen für eine wirkende Falzkraft (5) ein Kraftvektor bestimmt werden kann, und wobei das wenigstens eine Sensorelement (17) zur Erfassung der elastischen Verformung des Messkörpers (111) ausgebildet ist.

2. Falzroboter (4) nach Anspruch 1, **dadurch gekennzeichnet, dass** der Messkörper (111) säulenförmig ausgebildet ist.

3. Falzroboter (4) nach Anspruch 1 oder Anspruch 2, **dadurch gekennzeichnet, dass** das Verbindungselement (11) einen ersten Verbindungsabschnitt (112) und einen zweiten Verbindungsabschnitt (113) aufweist, wobei das Verbindungselement (11) über den ersten Verbindungsabschnitt (112) mit dem Anbindungselement (16) verbunden ist und über den zweiten Verbindungsabschnitt (113) mit dem Kopfelement (13) verbunden ist.

4. Falzroboter (4) nach einem der vorstehenden Ansprüche, **dadurch gekennzeichnet, dass** dem Falzroboter (4) eine Recheneinheit (12) zugeordnet ist, wobei die Recheneinheit (12) ausgebildet ist, von dem wenigstens einen Sensorelement (17) bereitgestellte Sensorsignale zu erfassen und zu verarbeiten.

5. Falzroboter (4) nach Anspruch 4, **dadurch gekennzeichnet, dass** in der Recheneinheit (12) ein Soll-Kraftverlauf (8) einer Falzkraft (5) für einen vorgegebenen Falzvorgang hinterlegt ist, die Recheneinheit (12) weiter ausgebildet ist, aus den erfassten Sensorsignalen einen Ist-Kraftverlauf (9) der Falzkraft (5) für einen Falzvorgang zu erfassen und eine mittels einer der wenigstens einen Falzrolle (151, 152, 153) aufgebrachte Falzkraft (5) für einen nachfolgenden Falzvorgang durch eine geänderte Ansteuerung des Falzroboters (4) derart anzupassen, dass der Kraftverlauf des nachfolgenden Falzvorgangs während des Falzvorgangs möglichst dem Soll-Kraftverlauf (8) entspricht.

6. Falzroboter (4) nach Anspruch 4 oder Anspruch 5, **dadurch gekennzeichnet, dass** die Recheneinheit (12) weiter ausgebildet ist, eine bei einem Falzvorgang aufgetretene Überlast in Bezug auf den Falzroboter (4) durch Auswertung der Sensorsignale zu erkennen und eine mittels einer der wenigstens einen Falzrolle (151, 152, 153) aufgebrachte Falzkraft (5) für einen nachfolgenden Falzvorgang derart anzupassen, dass eine dauerhafte Überlast in Bezug auf den Falzroboter (4) verhindert wird.

7. Falzroboter (4) nach einem der vorstehenden Ansprüche, **gekennzeichnet durch** eine Kommunikationsschnittstelle, die ausgebildet ist, von dem wenigstens einen Sensorelement (17) erfasste Sensorsignale über ein Kommunikationsnetzwerk an eine entfernte Recheneinheit zu übertragen.

8. Falzroboter (4) nach einem der vorstehenden Ansprüche, **gekennzeichnet durch** eine Mehrzahl von unterschiedlich ausgebildeten Falzrollen (151, 152, 153), die an dem Kopfelement (13) angeordnet sind, wobei der Falzroboter (4) ausgebildet ist, mittels der unterschiedlich ausgebildeten Falzrollen (151, 152, 153) unterschiedliche Falzvorgänge auszuführen.

9. Falzroboter (4) nach einem der vorstehenden Ansprüche, **dadurch gekennzeichnet, dass** der Falzroboter (4) ausgebildet ist, gemäß einem Verfahren nach einem der Ansprüche 11 bis 16 betrieben zu werden.

10. Verfahren zum Modernisieren eines Falzroboters (4) mit einem Roboterfalzkopf (1) umfassend ein Anbindungselement (16), ein erstes Verbindungselement, ein Kopfelement (13) und wenigstens eine Falzrolle (151, 152, 153), wobei das erste Verbindungselement zwischen dem Anbindungselement (16) und dem Kopfelement (13) angeordnet ist, und die wenigstens eine Falzrolle (151, 152, 153) an dem Kopfelement (13) angeordnet ist, **dadurch gekennzeichnet, dass** das erste Verbindungselement entfernt und durch ein zweites Verbindungselement (11) ersetzt wird, wobei zumindest ein Teil des zweiten Verbindungselements (11) als Messkörper (111) aus miteinander verbundenen Streben (1111), die eine Gerüststruktur bilden, ausgestaltet ist, wobei der Messkörper (111) mit wenigstens einem an dem Messkörper (111) angeordneten Sensorelement (17) zur Erfassung von bei einem Falzvorgang mittels einer der wenigstens einen Falzrolle (151, 152, 153) auf einen Falzflansch ausgeübten Falzkraft (5) ausgebildet ist, und wobei durch die Modernisierung ein Falzroboter (4) gemäß einem der Ansprüche 1 bis 9 geschaffen wird.

11. Verfahren zum Betreiben eines Falzroboters (4) mit einem Roboterfalzkopf (1), insbesondere eines Falzroboters nach einem der Ansprüche 1 bis 8, wobei der Roboterfalzkopf (1) ein Anbindungselement (16), ein Verbindungselement (11), ein Kopfelement (13) und mehrere Falzrollen (151, 152, 153) umfasst, wobei das Verbindungselement (11) zwischen dem Anbindungselement (16) und dem Kopfelement (13) angeordnet ist, und die Falzrollen (151, 152, 153) an dem Kopfelement (13) angeordnet sind, **dadurch gekennzeichnet, dass** während eines Falzvorgangs eine elastische Verformung des Verbindungselements (11) erfasst wird, wobei ein Zwischenstück des Verbindungselements (11) oder das vollständige Verbindungselement (11) als Messkörper (111) aus miteinander verbundenen Streben (1111), die eine Gerüststruktur bilden, ausgestaltet ist, wobei der Messkörper (111) elastisch verformbar in alle drei Raumrichtungen ausgebildet ist, und aus der erfassten elastischen Verformung eine bei dem Falzvorgang mittels einer Falzrolle (151, 152, 153) des Falzroboters (4) auf einen Falzflansch ausgeübte Falzkraft (5) und für die Falzkraft (5) in alle drei Raumrichtungen ein Kraftvektor bestimmt wird.

12. Verfahren nach Anspruch 11, **dadurch gekennzeichnet, dass** bei einem Falzvorgang eine Falzrolle (151, 152, 153) des Falzroboters (4) gemäß vorgegebenen Bahnpunkten an einem Bauteil (2) entlang bewegt wird, wobei die bestimmte Falzkraft (5) den jeweiligen Bahnpunkten zur Ermittlung eines Ist-Falzkraftverlaufs (9) zugeordnet wird.

13. Verfahren nach Anspruch 12, **dadurch gekennzeichnet, dass** der ermittelte Ist-Falzkraftverlauf (9) mit einem für diesen Falzvorgang vorgegebenen Soll-Falzkraftverlauf (8) verglichen wird und Abweichungen zwischen dem ermittelten Ist-Falzkraftverlauf (9) und dem Soll-Falzkraftverlauf (8) für die jeweiligen Bahnpunkte ermittelt werden.

14. Verfahren nach Anspruch 13, **dadurch gekennzeichnet, dass** für einen nachfolgenden Falzvorgang die von der Falzrolle (151, 152, 153) auf den Falzflansch ausgeübte Falzkraft (5) derart angepasst wird, dass die in Bezug auf den zuvor durchgeführten Falzvorgang ermittelten Abweichungen reduziert werden.

15. Verfahren nach Anspruch 14, **dadurch gekennzeichnet, dass** zur Anpassung der ausgeübten Falzkraft (5) eine dem Falzroboter (4) vorgegebene Bewegungsbahn des Roboters geändert wird.

16. Verfahren nach einem der Ansprüche 11 bis 15, **dadurch gekennzeichnet, dass** für einen durchgeführten Falzvorgang anhand der bestimmten Falzkraft (5) ein Auftreten einer Überlast in Bezug auf den Falzroboter (4) geprüft wird, und bei einer erkannten Überlast ein nachfolgender Falzvorgang zur Vermeidung der Überlast angepasst wird.

## Claims

1. A hemming robot (4) which is configured to carry out a hemming operation, with a robot hemming head (1) comprising an attaching element (16), a connecting element (11), a head element (13) and a plurality of hemming rollers (151, 152, 153), wherein the connecting element (11) is arranged between the attaching element (16) and the head element (13), and the at least one hemming roller (151, 152, 153) is arranged on the head element (13), **characterized in that** an intermediate piece of the connecting element (11) or the complete connecting element (11) is configured as a measuring element (111) from struts (1111) which are connected to one another and form a framework structure, wherein the measuring element (111) forms, with at least one sensor element (17) arranged on the measuring element (111), a sensor unit which is configured for the detection of a hemming force (5) exerted on a hem flange by means of one of the plurality of hemming rollers (151, 152, 153) during a hemming operation, wherein the measuring element (111) is of elastically deformable configuration in all three spatial directions, wherein a force vector can be determined for an active hemming force (5) by a deformation capability in all three spatial directions, and wherein the at least one sensor element (17) is configured for the detection of the elastic deformation of the measuring element (111).

2. The hemming robot (4) as claimed in claim 1, **characterized in that** the measuring element (111) is of column-shaped configuration.

3. The hemming robot (4) as claimed in claim 1 or claim 2, **characterized in that** the connecting element (11) has a first connecting portion (112) and a second connecting portion (113), wherein the connecting element (11) is connected via the first connecting portion (112) to the attaching element (16) and is connected via the second connecting portion (113) to the head element (13).

4. The hemming robot (4) as claimed in one of the preceding claims, **characterized in that** the hemming robot (4) is assigned a computing unit (12), wherein the computing unit (12) is configured to detect and to process sensor signals provided by the at least one sensor element (17).

5. The hemming robot (4) as claimed in claim 4, **characterized in that** a setpoint force profile (8) of a hemming force (5) for a predefined hemming operation is stored in the computing unit (12), the computing unit (12) is configured, furthermore, to detect an actual force profile (9) of the hemming force (5) for a hemming operation from the detected sensor signals, and to adapt a hemming force (5), applied by means of one of the at least one hemming roller (151, 152, 153), for a following hemming operation by way of a changed actuation of the hemming robot (4) in such a way that the force profile of the following hemming operation during the hemming operation corresponds as far as possible to the setpoint force profile (8).

6. The hemming robot (4) as claimed in claim 4 or claim 5, **characterized in that** the computing unit (12) is configured, furthermore, to detect an overload, which occurred during a hemming operation, in relation to the hemming robot (4) by evaluation of the sensor signals, and to adapt a hemming force (5), applied by means of one of the at least one hemming roller (151, 152, 153), for a following hemming operation in such a way that a sustained overload in relation to the hemming robot (4) is prevented.

7. The hemming robot (4) as claimed in one of the preceding claims, **characterized by** a communications interface which is configured to transmit sensor signals detected by the at least one sensor element (17) via a communications network to a remote computing unit.

8. The hemming robot (4) as claimed in one of the preceding claims, **characterized by** a plurality of hemming rollers (151, 152, 153) of different configuration which are arranged on the head element (13), wherein the hemming robot (4) is configured to carry out different hemming operations by means of the hemming rollers (151, 152, 153) of different configuration.

9. The hemming robot (4) as claimed in one of the preceding claims, **characterized in that** the hemming robot (4) is configured to be operated according to a method as claimed in one of claims 11 to 16.

10. A method for modernizing a hemming robot (4) with a robot hemming head (1) comprising an attaching element (16), a first connecting element, a head element (13) and at least one hemming roller (151, 152, 153), wherein the first connecting element is arranged between the attaching element (16) and the head element (13), and the at least one hemming roller (151, 152, 153) is arranged on the head element (13), **characterized in that** the first connecting element is removed and is replaced by a second connecting element (11), wherein at least one part of the second connecting element (11) is configured as a measuring element (111) from struts (1111) which are connected to one another and form a framework structure, wherein the measuring element (111) is configured with at least one sensor element (17), arranged on the measuring element (111), for the detection of a hemming force (5) exerted on a hem flange by means of one of the at least one hemming roller (151, 152, 153) during a hemming operation, and wherein a hemming robot (4) as claimed in one of claims 1 to 9 is produced by way of the modernizing.

11. A method for operating a hemming robot (4) with a robot hemming head (1), in particular a hemming robot as claimed in one of claims 1 to 8, wherein the robot hemming head (1) comprises an attaching element (16), a connecting element (11), a head element (13) and a plurality of hemming rollers (151, 152, 153), wherein the connecting element (11) is arranged between the attaching element (16) and the head element (13), and the hemming rollers (151, 152, 153) are arranged on the head element (13), **characterized in that** an elastic deformation of the connecting element (11) is detected during a hemming operation, wherein an intermediate piece of the connecting element (11) or the complete connecting element (11) is configured as a measuring element (111) from struts (1111) which are connected to one another and form a framework structure, wherein the measuring element (111) is of elastically deformable configuration in all three spatial directions, and a hemming force (5), exerted on a hem flange by means of a hemming roller (151, 152, 153) of the hemming robot (4) during the hemming operation and a force vector for the hemming force (5) in all three spatial directions are determined from the detected elastic deformation.

12. The method as claimed in claim 11, **characterized in that,** during a hemming operation, a hemming roller (151, 152, 153) of the hemming robot (4) is moved along a component (2) according to predefined waypoints, wherein the determined hemming force (5) is assigned to the respective waypoints for the determination of an actual hemming force profile (9).

13. The method as claimed in claim 12, **characterized in that** the determined actual hemming force profile (9) is compared with a setpoint hemming force profile (8) which is predefined for this hemming operation, and deviations between the determined actual hemming force profile (9) and the setpoint hemming force profile (8) for the respective waypoints are determined.

14. The method as claimed in claim 13, **characterized in that** the hemming force (5) exerted on the hem flange by the hemming roller (151, 152, 153) is adapted for a following hemming operation in such a way that the deviations which are determined in relation to the hemming operation which was previously carried out are reduced.

15. The method as claimed in claim 14, **characterized in that** a movement path, predefined for the hemming robot (4), of the robot is changed for the adaptation of the exerted hemming force (5).

16. The method as claimed in one of claims 11 to 15, **characterized in that,** for a hemming operation which is carried out, an occurrence of an overload in relation to the hemming robot (4) is checked using the determined hemming force (5), and, if an overload is detected, a following hemming operation is adapted in order to avoid the overload.

## Revendications

1. Robot de sertissage (4) configuré pour effectuer une opération de sertissage, avec une tête de sertissage robotisée (1) comprenant un élément de fixation (16), un élément de connexion (11), un élément de tête (13) et une pluralité de rouleaux de sertissage (151, 152, 153), dans lequel l'élément de connexion (11) est disposé entre l'élément de fixation (16) et l'élément de tête (13), et au moins un rouleau de bordure (151, 152, 153) est disposé sur l'élément de tête (13), **caractérisé en ce qu'** une pièce intermédiaire de l'élément de connexion (11) ou l'élément de connexion complet (11) est configuré comme un élément de mesure (111) à partir d'entretoises (1111) qui sont reliés les uns aux autres et forment une structure en treillis, l'élément de mesure (111) formant, avec au moins un élément capteur (17) disposé sur l'élément de mesure (111), une unité capteur qui est configurée pour la détection d'une force de sertissage (5) exercée sur une bride de sertissage au moyen de l'un des multiples rouleaux de sertissage (151, 152, 153) pendant une opération de sertissage, dans lequel l'élément de mesure (111) est de configuration élastiquement déformable dans les trois directions spatiales, dans lequel un vecteur de force peut être déterminé pour une force de sertissage active (5) par une capacité de déformation dans les trois directions spatiales, et dans lequel le au moins un élément capteur (17) est configuré pour détecter la déformation élastique de l'élément de mesure (111).

2. Le robot de sertissage (4) selon la revendication 1, **caractérisé en ce que** l'élément de mesure (111) présente une configuration en forme de colonne.

3. Le robot de sertissage (4) selon la revendication 1 ou la revendication 2, **caractérisé en ce que** l'élément de connexion (11) comporte une première partie de connexion (112) et une deuxième partie de connexion (113), l'élément de connexion (11) étant relié par la première partie de connexion (112) à l'élément de fixation (16) et par la deuxième partie de connexion (113) à l'élément de tête (13).

4. Le robot de sertissage (4) selon l'une des revendications précédentes, **caractérisé en ce qu'**une unité de calcul (12) est associée au robot de sertissage (4), l'unité de calcul (12) étant configurée pour détecter et traiter les signaux de capteur fournis par au moins un élément capteur (17).

5. Le robot de sertissage (4) selon la revendication 4, **caractérisé en ce qu'**un profil de force de consigne (8) d'une force de sertissage (5) pour une opération de sertissage prédéfinie est stocké dans l'unité de calcul (12), l'unité de calcul (12) est en outre configurée pour détecter un profil de force réel (9) de la force de sertissage (5) pour une opération de sertissage à partir des signaux de capteur détectés, et pour adapter une force de sertissage (5), appliquée au moyen d'au moins un rouleau de sertissage (151, 152, 153), pour une opération de sertissage suivante au moyen d'un actionnement modifié du robot de sertissage (4) de telle sorte que le profil de force de l'opération de sertissage suivante pendant l'opération de sertissage corresponde autant que possible au profil de force de consigne (8).

6. Le robot de sertissage (4) selon la revendication 4 ou la revendication 5, **caractérisé en ce que** l'unité de calcul (12) est en outre configurée pour détecter une surcharge, qui s'est produite pendant une opération de sertissage, par rapport au robot de sertissage (4) par évaluation des signaux du capteur, et pour adapter une force de sertissage (5), appliquée au moyen d'au moins un rouleau de sertissage (151, 152, 153), pour une opération de sertissage suivante de telle manière qu'une surcharge prolongée par rapport au robot de sertissage (4) soit évitée.

7. Le robot de sertissage (4) selon l'une des revendications précédentes, **caractérisé par** une interface de communication qui est configurée pour transmettre les signaux de capteur détectés par le au moins un élément capteur (17) via un réseau de communication à une unité informatique distante.

8. Le robot de sertissage (4) selon l'une des revendications précédentes, **caractérisé par** une pluralité de rouleaux de sertissage (151, 152, 153) de configuration différente qui sont disposés sur l'élément de tête (13), dans lequel le robot de sertissage (4) est configuré pour effectuer différentes opérations de sertissage au moyen des rouleaux de sertissage (151, 152, 153) de configuration différente.

9. Le robot de sertissage (4) selon l'une des revendications précédentes, **caractérisé en ce que** le robot de sertissage (4) est configuré pour être utilisé selon un procédé selon l'une des revendications 11 à 16.

10. Procédé de modernisation d'un robot de sertissage (4) avec une tête de sertissage robotisée (1) comprenant un élément de fixation (16), un premier élément de connexion, un élément de tête (13) et au moins un rouleau de sertissage (151, 152, 153), dans lequel le premier élément de connexion est disposé entre l'élément de fixation (16) et l'élément de tête (13), et le au moins un rouleau de sertissage (151, 152, 153) est disposé sur l'élément de tête (13), **caractérisé en ce que** le premier élément de connexion est supprimé et remplacé par un deuxième élément de connexion (11), dans lequel au moins une partie du deuxième élément de connexion (11) est configurée comme un élément de mesure (111) à partir d'entretoises (1111) qui sont reliés les uns aux autres et forment une structure en treillis, l'élément de mesure (111) étant configuré avec au moins un élément capteur (17), disposé sur l'élément de mesure (111), pour la détection d'une force de sertissage (5) exercée sur une bride de sertissage au moyen d'au moins un rouleau de sertissage (151, 152, 153) pendant une opération de sertissage, et dans lequel un robot de sertissage (4) selon l'une des revendications 1 à 9 est produit par la modernisation.

11. Procédé pour faire fonctionner un robot de sertissage (4) avec une tête de sertissage robotisée (1), en particulier un robot de sertissage selon l'une des revendications 1 à 8, dans lequel la tête de sertissage robotisée (1) comprend un élément de fixation (16), un élément de connexion (11), un élément de tête (13) et une pluralité de rouleaux de sertissage (151, 152, 153), dans lequel l'élément de connexion (11) est disposé entre l'élément de fixation (16) et l'élément de tête (13), et les rouleaux de sertissage (151, 152, 153) sont disposés sur l'élément de tête (13), **caractérisé en ce qu'**une déformation élastique de l'élément de connexion (11) est détectée pendant une opération de sertissage, dans lequel une pièce intermédiaire de l'élément de connexion (11) ou l'élément de connexion complet (11) est configuré comme un élément de mesure (111) à partir d'entretoises (1111) qui sont reliées les unes aux autres et forment une structure en treillis, l'élément de mesure (111) étant configuré de manière à être élastiquement déformable dans les trois directions spatiales, et une force de sertissage (5), exercée sur une bride de sertissage au moyen d'un rouleau de sertissage (151, 152, 153) du robot de sertissage (4) pendant l'opération de sertissage et un vecteur de force pour la force de sertissage (5) dans les trois directions spatiales sont déterminés à partir de la déformation élastique détectée.

12. Procédé selon la revendication 11, **caractérisé en ce que,** pendant une opération d'ourlet, un rouleau de sertissage (151, 152, 153) du robot de sertissage (4) est déplacé le long d'un composant (2) selon des points de passage prédéfinis, la force de sertissage déterminée (5) étant attribuée aux points de passage respectifs pour la détermination d'un profil de force de sertissage réel (9).

13. Procédé selon la revendication 12, **caractérisé en ce que** le profil de force de sertissage réel déterminé (9) est comparé à un profil de force de sertissage de consigne (8) qui est prédéfini pour cette opération de sertissage, et les écarts entre le profil de force de sertissage réel déterminé (9) et le profil de force de sertissage de consigne (8) pour les points de passage respectifs sont déterminés.

14. Procédé selon la revendication 13, **caractérisé en ce que** la force de sertissage (5) exercée sur la bride de sertissage par le rouleau de sertissage (151, 152, 153) est adaptée pour une opération de sertissage suivante de telle manière que les écarts qui sont déterminés par rapport à l'opération de sertissage qui a été effectuée précédemment soient réduits.

15. Procédé selon la revendication 14, **caractérisé en ce qu'**une trajectoire prédéfinie pour le robot de sertissage (4) est modifiée pour l'adaptation de la force de sertissage (5) exercée.

16. Procédé selon l'une des revendications 11 à 15, **caractérisé en ce que,** pour une opération de sertissage qui est effectuée, l'apparition d'une surcharge par rapport au robot de sertissage (4) est vérifiée à l'aide de la force de sertissage déterminée (5) et, si une surcharge est détectée, une opération de sertissage suivante est adaptée afin d'éviter la surcharge.
